# EUROPÄISCHE PATENTSCHRIFT

(11) **EP 4 139 591 B1**
(45) Veröffentlichungstag und Bekanntmachung des Hinweises auf die Patenterteilung: **11.11.2026**
(21) Anmeldenummer: 21712795.0
(22) Anmeldetag: 16.03.2021
(51) Int. Cl.: F16J 15/34

(54) **GLEITRINGDICHTUNGSANORDNUNG MIT VERSCHLEISSOPTIMIERUNG**
MECHANICAL SEAL ASSEMBLY WITH ABRASION OPTIMIZATION
ENSEMBLE JOINT MÉCANIQUE AVEC OPTIMISATION DE L'ABRASION

(30) Priorität: 21.04.2020 DE 102020110776
(43) Veröffentlichungstag der Anmeldung: 01.03.2023
(73) Patentinhaber: EagleBurgmann Germany GmbH & Co. KG, 82515 Wolfratshausen (DE)
(72) Erfinder: BREUN, Sylvia, 82335 Berg (DE); EISFELD, Christian, 82515 Wolfratshausen (DE)
(74) Vertreter: Hoefer & Partner Patentanwälte mbB
(86) Internationale Anmeldenummer: PCT/EP2021/056621
(87) Internationale Veröffentlichungsnummer: WO 2021/213736

(56) Entgegenhaltungen:
- EP-A1- 1 630 463
- DE-A1- 102013 005 926
- US-A1- 2006 119 049

## Beschreibung

Die vorliegende Erfindung betrifft eine Gleitringdichtungsanordnung mit einem gezielt einstellbaren Verschleißverhalten.

Gleitringdichtungsanordnungen sind aus dem Stand der Technik in unterschiedlichen Ausgestaltungen bekannt. Bei der Auslegung von Gleitringdichtungsanordnungen muss ein Kompromiss zwischen möglichst geringer Leckage und einem akzeptablen Verschleiß der Gleitflächen gefunden werden. Weiterhin muss eine betriebswirtschaftliche Optimierung hinsichtlich Herstellkosten und Betriebskosten für einen Nutzer der Gleitringdichtungsanordnung gefunden werden. Bei Pumpen oder Rührwerken werden beispielsweise Gleitringdichtungen eingesetzt, bei denen einer der Gleitringe aus einem härteren Material als der andere der Gleitringe ausgeführt ist. Der Gleitring mit der geringeren Härte wird hierbei als Verschleißgleitring ausgelegt und weist an einem Basisbereich eine Verschleißzugabe in Form eines ringzylindrischen Verschleißbereichs auf. Die Gleitringdichtung wird dann solange genutzt, bis der ringzylindrische Verschleißbereich abgenutzt ist. Als Materialpaarung wird hierbei beispielsweise Siliziumkarbid für den härteren Gleitring verwendet und Kohlegraphit für den weniger harten Gleitring. Problematisch bei derartigen Gleitringdichtungsanordnungen ist jedoch, dass sich eine Belastung und Entlastung im Dichtspalt zwischen den beiden Gleitflächen der Gleitringe durch den Verschleiß kontinuierlich verändern. Dadurch ändert sich auch das Verschleißverhalten der Gleitringdichtungsanordnung über die Zeit. Dies macht es jedoch extrem schwierig, beispielsweise einen Austauschzeitpunkt für den abgenutzten Gleitring zu bestimmen.

Aus der DE 10 2013 005 926 A1 ist eine Gleitringdichtungsanordnung bekannt, wobei die erste und zweite Gleitfläche unterschiedliche Härten aufweisen.

Aus der EP 1 630 463 A1 ist eine Gleitringdichtung bekannt, wobei der erste Gleitring Siliziumkarbid als Substrat hat und Kohlenstoff enthält, und der zweite Gleitring ein Siliziumkarbid als Hauptbestandteil enthält und Poren mit einer Größe von 5 bis 200 µm aufweist, die unabhängig voneinander darin verteilt sind.

Aus der US 2006/0119049 A1 ist eine Gleitringdichtungsanordnung mit selbstschmierender Eigenschaft für den Einsatz zur Abdichtung von flüssigen oder gasförmigen Medien bekannt.

Es ist daher Aufgabe der vorliegenden Erfindung, eine Gleitringdichtungsanordnung bereitzustellen, welche bei einfachem Aufbau und einfacher, kostengünstiger Herstellbarkeit eine gezielte Einstellung eines Verschleißverhaltens eines Gleitrings ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass ein gezieltes Einstellen eines Verschleißverhaltens eines Gleitrings möglich ist. Hierbei umfasst die Gleitringdichtungsanordnung eine Gleitringdichtung mit einem rotierenden und einem stationären Gleitring, welche zwischen ihren Gleitflächen einen Dichtspalt aufweisen. Einer der beiden Gleitringe ist dabei als Verschleißgleitring ausgelegt und weist eine geringere Härte als der andere der Gleitringe auf, so dass die Gleitringdichtung eine Hart-Weich-Paarung aufweist. Der Gleitring mit der geringeren Härte weist einen Basisbereich und einen Verschleißbereich, auch Verschleißzugabe genannt, auf. Die Gleitfläche dieses Verschleißgleitrings ist dabei am Verschleißbereich angeordnet. Der Verschleißbereich dieses Verschleißgleitrings weist dabei in Axialrichtung der Gleitringdichtungsanordnung einen zumindest teilweise unzylindrischen Bereich auf. Somit ist erfindungsgemäß der Verschleißbereich des weniger harten Gleitrings nicht mehr ringzylindrisch mit konstantem Außendurchmesser und konstantem Innendurchmesser ausgebildet, sondern der Außendurchmesser und/oder Innendurchmesser verändert sich in Axialrichtung an zumindest einem Teilbereich des Verschleißbereichs. Hierdurch wird zwar eine Herstellung des Gleitrings teurer, da nicht mehr die einfache geometrische, ringzylindrische Form des Verschleißbereichs gewählt wird sondern je nach Anwendungsfall individuell ausgewählte geometrische Gestaltungen vorgesehen sind. Trotzdem weist ein derart gestalteter Verschleißgleitring eine verbesserte Leistungsfähigkeit auf, da auch insbesondere das Verschleißverhalten in Abhängigkeit vom schon auftretenden Verschleiß und damit den beispielsweise sich geänderten Belastungskräften an den Gleitflächen angepasst werden kann. Somit kann bei einer Gleitringdichtung mit einer Hart-Weich-Paarung der Gleitringe ein gezieltes Verschleißverhalten durch geometrische Anpassung des weniger harten Gleitrings mit einer von einem Ringzylinder abweichenden Form ermöglicht werden.

Ferner weist der Verschleißgleitring einen ersten Teilabschnitt auf, welcher sich unmittelbar an die Gleitfläche des Verschleißgleitrings anschließt und eine sich verändernde, ringförmige Querschnittsfläche aufweist. Die geometrische Form des ersten Teilabschnitts wird dabei vorzugsweise derart gewählt, dass ein relativ schneller Verschleiß an dem ersten Teilabschnitt auftritt, um ein schnelles Einlaufen der Gleitringpaarung an den Gleitflächen zu ermöglichen. Insbesondere können dadurch möglicherweise vorhandene Welligkeiten in den Gleitflächen schnell durch Verschleiß des weniger harten Gleitrings ausgeglichen werden.

Weiter schließt sich unmittelbar an den ersten Teilabschnitt des Verschleißbereichs ein zweiter Teilabschnitt an, welcher über den Betrieb der Gleitringdichtungsanordnung das eigentliche Verschleißverhalten definieren soll. Der zweite Teilabschnitt stellt somit die normale Funktionalität des Verschleißbereichs dar. Der zweite Teilabschnitt kann beispielsweise auch als Zylinderring mit konstantem Außendurchmesser und konstantem Innendurchmesser in Axialrichtung ausgebildet sein. Alternativ kann der zweite Teilabschnitt auch mit sich verändernden Außendurchmessern und/oder Innendurchmessern in Axialrichtung ausgebildet sein. Hierdurch kann insbesondere eine Änderung einer Belastungskraft auf die Gleitflächen kompensiert werden, sodass über die Lebensdauer der Gleitringdichtungsanordnung die an den Gleitflächen auftretenden Kräfte möglichst konstant bleiben, um den Dichtspalt zwischen den Gleitflächen in Radialrichtung möglichst konstant zu halten.

Der unzylindrische Bereich des Verschleißbereichs weist in Axialrichtung der Gleitringdichtungsanordnung eine sich verändernde, ringförmige Querschnittsfläche auf derart, dass sich zumindest ein Außendurchmesser des Verschleißbereichs und/oder ein Innendurchmesser des Verschleißbereichs jeweils in Axialrichtung ändert. Somit kann der unzylindrische Bereich durch entweder einem sich ändernden Außendurchmesser bei konstantem Innendurchmesser oder einem sich ändernden Innendurchmesser bei konstantem Außendurchmesser oder bei sich änderndem Außen- und Innendurchmesser erreicht werden.

Der erste Teilabschnitt weist eine sich ausgehend von der Gleichfläche erweiternde Querschnittsfläche auf.

Gemäß einer weiteren bevorzugten Ausgestaltung der Erfindung weist der Verschleißbereich einen teilzylindrischen Bereich auf. D.h., der Verschleißbereich ist teilweise zylindrisch und teilweise nichtzylindrisch ausgebildet. Alternativ ist der gesamte Verschleißbereich in Axialrichtung mit einer sich ändernden Querschnittsfläche ausgestaltet.

Weiter bevorzugt umfasst der Verschleißbereich einen dritten Teilabschnitt, welcher sich in Axialrichtung unmittelbar an den zweiten Teilabschnitt anschließt. Der dritte Teilabschnitt weist ebenfalls eine sich verändernde, ringförmige Querschnittsfläche auf.

Besonders bevorzugt sind dabei die Außendurchmesser und Innendurchmesser am ersten Teilabschnitt derart ausgestaltet, dass diese sich geradlinig vergrößern oder verkleinern. Hierdurch kann beispielsweise ein konischer erster Teilabschnitt realisiert werden, wenn die Winkel für die Außendurchmesser und Innendurchmesser gleich gewählt sind. Es ist jedoch auch möglich, dass sich der Außendurchmesser des ersten Teilabschnitts mit einem konstanten ersten Winkel α vergrößert und sich der Innendurchmesser des ersten Teilabschnitts mit einem zweiten Winkel β verkleinert, wobei der erste und zweite Winkel unterschiedlich groß sind. Dadurch ergibt sich im Längsschnitt ein schiefer Konus für den ersten Teilabschnitt. Besonders bevorzugt ist der zweite Winkel größer als der erste Winkel, wobei keiner der Winkel 45° ist.

Alternativ vergrößert oder verkleinert sich der erste Teilabschnitt am Außendurchmesser und/oder Innendurchmesser bogenförmig, beispielsweise parabelförmig. Auch ist es möglich, dass sich entweder der Außendurchmesser oder der Innendurchmesser geradlinig verändern und der andere der beiden Durchmesser sich bogenförmig verändert.

Es sei angemerkt, dass an den Kanten am Übergang zwischen der Gleitfläche und dem ersten Teilabschnitt auch eine fertigungsbedingte Fase von einem oder wenigen Zehntel Millimetern vorgesehen sein kann, welche jedoch zum Kantenschutz des Gleitrings an der Gleitfläche vorgesehen sind und nicht für das erfindungsgemäße definierte Verschleißverhalten des Verschleißbereichs. Derart fertigungsbedingte Fasen können immer am Übergang zwischen der Gleitfläche und dem ersten Teilabschnitt vorgesehen werden.

Gemäß einer weiteren alternativen Ausgestaltung der Erfindung weist der Verschleißbereich wenigstens einen Teilbereich auf, dessen Querschnittsfläche in einer Axialrichtung konstant bleibt, sich jedoch der Außendurchmesser und der Innendurchmesser in der Axialrichtung kontinuierlich ändern, beispielsweise kontinuierlich größer werden oder kontinuierlich kleiner werden. Somit ergibt sich für diesen Teilbereich im Längsschnitt eine parallelogrammartige Form.

Vorzugsweise ist der dritte Teilabschnitt des Verschleißbereichs derart ausgebildet, dass das Verhalten der Gleitringdichtungsanordnung auf ein nahendes Ende einer Nutzungsdauer hinweist, beispielweise durch einen sprunghaften Anstieg einer Leckage, um auf einen Austausch von Teilen der Gleitringdichtungsanordnung hinzuweisen. Dadurch kann insbesondere vermieden werden, dass bei einer zu langen Nutzung der Gleitringdichtungsanordnung ein Anstoßen des härteren Gleitrings beispielsweise an einem Gleitringträger oder dergleichen auftritt.

Weiter bevorzugt ist der komplette Verschleißgleitring aus einem Graphit und/oder Kunststoff umfassenden Material hergestellt. Dadurch kann der Verschleißgleitring eine relativ geringe Härte aufweisen, um das gezielt einstellbare Verschleißverhalten aufzuweisen.

Der härtere der Gleitringe ist vorzugsweise aus einem Keramikmaterial oder einem Hartmetall hergestellt.

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht einer Gleitringdichtungsanordnung gemäß einem ersten Ausführungsbeispiel der Erfindung,
- Figur 2: eine schematische Teilschnittansicht der Gleitringdichtungsanordnung von Figur 1,
- Figur 3: eine schematische Teilschnittansicht einer Gleitringdichtungsanordnung gemäß einem zweiten Ausführungsbeispiel der Erfindung,
- Figur 4: eine schematische Teilschnittansicht einer Gleitringdichtungsanordnung gemäß einem dritten Ausführungsbeispiel der Erfindung, und
- Figur 5: eine schematische Teilschnittansicht einer Gleitringdichtungsanordnung gemäß einem vierten Ausführungsbeispiel der Erfindung.

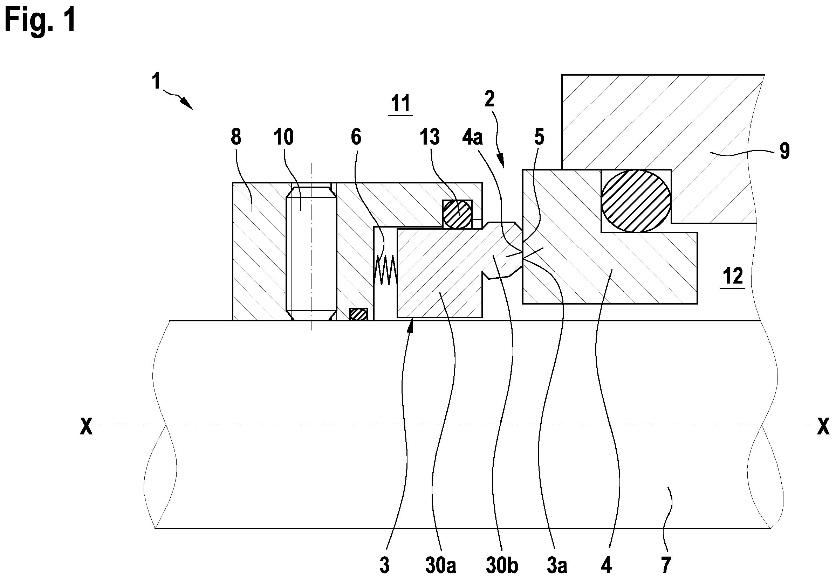

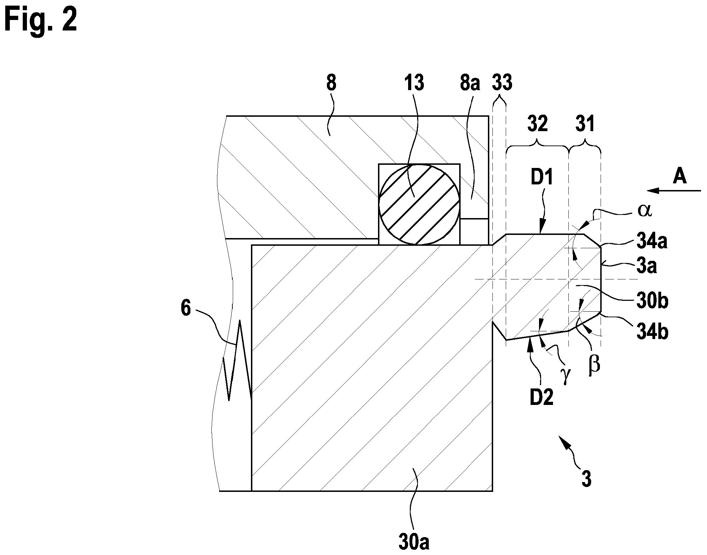

Nachfolgend wird unter Bezugnahme auf die Figuren 1 und 2 eine Gleitringdichtungsanordnung 1 gemäß einem ersten bevorzugten Ausführungsbeispiel der Erfindung im Detail beschrieben.

Wie aus Figur 1 ersichtlich ist, umfasst die Gleitringdichtungsanordnung 1 eine Gleitringdichtung 2 mit einem rotierenden Gleitring 3 mit einer ersten Gleitfläche 3a und einem stationären Gleitring 4 mit einer zweiten Gleitfläche 4a. Zwischen dem rotierenden Gleitring 3 und dem stationären Gleitring 4 ist ein Dichtspalt 5 ausgebildet. Die Gleitringdichtung 2 dichtet dabei einen Produktbereich 11 gegenüber einem Atmosphärenbereich 12 ab.

Der stationäre Gleitring 4 ist an einem Gehäuse 9 angeordnet.

Der rotierende Gleitring 3 ist mittels eines Gleitringträgers 8 an einer rotierenden Welle 7 fixiert. Der Gleitringträger 8 ist hierbei mittels einer Schraube 10 an der Welle 7 fixiert. Das Drehmoment der Welle wird dabei über den Gleitringträger 8 und eine Nebendichtung 13 auf den rotierenden Gleitring 3 übertragen.

Der rotierende Gleitring 3 weist, wie aus Figur 1 ersichtlich ist, einen Basisbereich 30a und einen Verschleißbereich 30b auf. Ferner ist eine Vorspanneinrichtung 6 am rotierenden Gleitring vorgesehen.

Der rotierende Gleitring 3 weist dabei eine geringere Härte als der stationäre Gleitring 4 auf. Der rotierende Gleitring 3 ist vorzugweise aus Kohlegraphit hergestellt. Der stationäre Gleitring 4 ist vorzugsweise aus Siliziumkarbid oder aus einem Hartmetall hergestellt. Somit weist die Gleitringdichtung 2 eine Hart-Weich-Paarung auf. Der Verschleißbereich 30b ist dabei absichtlich für einen im Betrieb auftretenden Verschleiß vorgesehen, wobei im Stand der Technik der Verschleißbereich 30b üblicherweise ringzylindrisch mit konstantem Innendurchmesser und konstantem Außendurchmesser ist.

Wie aus Figur 2 im Detail ersichtlich ist, ist erfindungsgemäß der Verschleißbereich 30b jedoch in einen ersten Teilabschnitt 31, einen zweiten Teilabschnitt 32 und einen dritten Teilabschnitt 33 unterteilt.

Wie aus Figur 2 ersichtlich ist, grenzt der erste Teilabschnitt 31 unmittelbar benachbart zur Gleitfläche 3a des rotierenden Gleitrings 3. Dabei ist an einem Außenumfang der Gleitfläche 3a eine erste Fase 34a und an einem Innenumfang der Gleitfläche 3a eine zweite Fase 34b ausgebildet. Die Fasen 34a, 34b weisen eine Größe von einem oder wenigen Zehntel Millimetern auf, beispielsweise 0,1 mm. Die beiden Fasen 34a und 34b sind fertigungsbedingt und schützen die Gleitfläche 3a vor einer unbeabsichtigten Beschädigung. Üblicherweise sind die erste und zweite Fase 34a und 34b in einem Winkel von 45° ausgebildet.

Wie aus Figur 2 ersichtlich ist, ist der erste Teilabschnitt 31 mit einer in Axialrichtung A der Gleitringdichtungsanordnung 1 sich verändernden, ringförmigen Querschnittsfläche ausgebildet. Ausgehend von der Gleitfläche 3a des rotierenden Gleitrings 3 nimmt die Querschnittsfläche in Axialrichtung A zum Basisbereich 30a zu. Am Außendurchmesser D1 ist dabei eine geradlinige Änderung in einem ersten Winkel α vorgesehen. Am Innendurchmesser D2 des ersten Teilabschnitts 31 ist ebenfalls eine geradlinige Veränderung des Innendurchmessers D2 in einem zweiten Winkel β vorgesehen. Die Winkel α und β sind dabei unterschiedlich. Der Außendurchmesser D1 geht dabei ausgehend von der Gleitfläche 3a ungefähr bei der Mitte des ersten Abschnitts 31 in einen konstanten Außendurchmesser D1 über. Dadurch reduziert sich der Anstieg der Vergrößerung der Querschnittsfläche in Axialrichtung A bis zum zweiten Teilabschnitt 32, da sich der Innendurchmesser D2 konstant verkleinert.

Der erste Teilabschnitt 31 stellt während eines Einlaufvorgangs direkt nach einem Einbau von neuen Gleitringen 3, 4 eine Qualitätsfunktion bereit, da dadurch insbesondere möglicherweise vorhandene Welligkeiten der Gleitringe durch ein relativ schnelles Verschleißen des ersten Teilabschnitts 31 ausgeglichen werden können.

Wie weiter aus Figur 2 ersichtlich ist, schließt sich unmittelbar an den ersten Teilabschnitt 31 der zweite Teilabschnitt 32 an. Der zweite Teilabschnitt 32 bildet den sog. Funktionsbereich des Verschleißbereichs 30b des rotierenden Gleitrings 3, in welchem ein im Wesentlichen konstantes Dichtungsverhalten der Gleitringdichtung 2 erreicht werden soll. Hierbei ist der Außendurchmesser D1 des zweiten Teilabschnitts konstant und der Innendurchmesser D2 des zweiten Teilabschnitts 32 verkleinert sich kontinuierlich mit einem dritten Winkel γ in Axialrichtung A. Dadurch kann eine Belastung der Gleitringdichtung an den Gleitflächen 3a, 4a über die Nutzungsdauer möglichst konstant gehalten werden, sodass der Dichtspalt 5 zwischen den Gleitflächen der beiden Gleitringe 3, 4 in Radialrichtung zur Mittelachse X-X der Gleitringdichtungsanordnung im Wesentlichen konstant bleibt.

Der dritte Teilabschnitt 33 schließt sich in Axialrichtung A unmittelbar an den zweiten Teilabschnitt 32 an. Wie aus Figur 2 ersichtlich ist, wird eine Querschnittsfläche des dritten Teilabschnitts 33 in Axialrichtung A wieder kleiner. Hierdurch wird ein Sicherheitsmerkmal an der Gleitringdichtungsanordnung realisiert, da dadurch die Dichtung zum Ende der Verschleißhöhe hin entlastet wird, sodass sich eine Leckage erhöht. Dies kann dabei als Kennzeichen verwendet werden, das innerhalb einer kurzen Zeit, beispielsweise mehreren Stunden oder Tagen, eine Wartung der Gleitringdichtungsanordnung mit ggf. einem Austausch der Gleitringe notwendig ist. Falls die Gleitringdichtung 2 weiterbetrieben würde, besteht die Gefahr, dass der stationäre Gleitring 4 gegen einen radial nach innen gerichteten Flansch 8a des Gleitringträgers 8 anstößt, was zu größeren Beschädigungen an der Gleitringdichtungsanordnung 1 führen kann. Somit ist der dritte Teilabschnitt 33 als Sicherheitsabschnitt ausgebildet, um zu signalisieren, wenn eine Wartung oder ein Austausch von Gleitringen notwendig ist.

Vorzugsweise ist der zweite Teilabschnitt 32 in Axialrichtung größer als der erste Teilabschnitt 31 und der dritte Teilabschnitt 33. Weiter bevorzugt sind in Axialrichtung A der erste Teilabschnitt 31 und der dritte Teilabschnitt 33 gleich groß. Besonders bevorzugt beträgt der zweite Teilabschnitt 32 von einer Gesamtlänge des Verschleißbereichs 30b in Axialrichtung A mindestens 80 %, vorzugsweise mindestens 85 %, weiter bevorzugt mindestens 90 %.

Zum Schutz der Gleitfläche 3a des rotierenden Gleitrings 3, insbesondere beim Handhaben der Gleitringe, können die fertigungsbedingten Fasen 34a, 34b vorgesehen sein.

Somit kann gezielt ein Verschleißverhalten der Gleitringdichtung 2 durch eine unzylindrische Ausbildung des Verschleißbereichs 30b realisiert werden. Dadurch kann insbesondere eine Dichtungshydraulik der Gleitringdichtung 2 über die Nutzungsdauer konstant bleiben, was sich insbesondere auch positiv auf die Lebensdauer der Gleitringdichtung 2 auswirkt, da der Dichtspalt 5 zwischen dem rotierenden Gleitring 3 und dem stationären Gleitring 4 über die Nutzungsdauer im Wesentlichen konstant bleibt und somit eine längere Lebensdauer garantiert. Das im Stand der Technik auftretende Problem, dass der Dichtspalt 5 sich in Richtung eines A (sog. A-Spalt) oder in Richtung eines V (V-Spalt) verformt, kann dadurch verhindert werden, was sich positiv auf die Lebensdauer der Gleitringdichtung auswirkt.

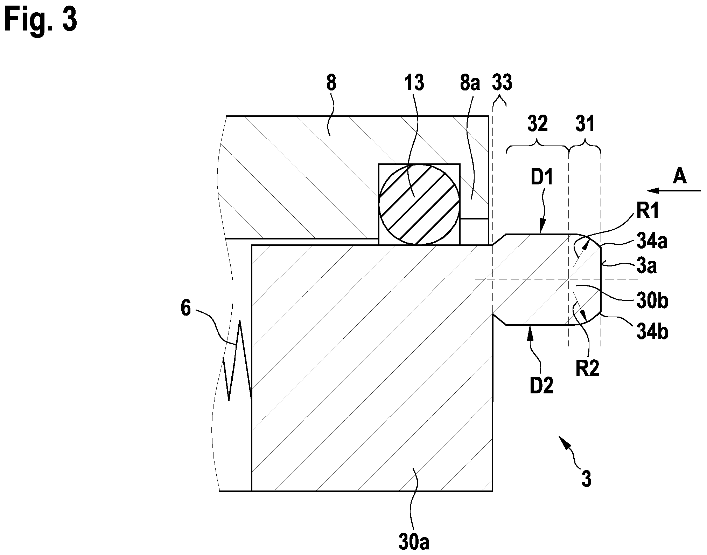

Figur 3 zeigt eine Gleitringdichtungsanordnung 1 gemäß einem zweiten Ausführungsbeispiel der Erfindung. Gleiche bzw. funktional gleiche Teile sind mit den gleichen Bezugszeichen bezeichnet.

Wie aus Figur 3 ersichtlich ist, entspricht das zweite Ausführungsbeispiel im Wesentlichen dem ersten Ausführungsbeispiel, wobei im Unterschied zum ersten Ausführungsbeispiel der Verschleißbereich 30b unterschiedlich ausgestaltet ist.

Wie aus Figur 3 ersichtlich ist, ist der erste Teilabschnitt 31 ausgehend von der Gleitfläche 3a des rotierenden Gleitrings 3 am Außendurchmesser D1 zuerst mit einem bogenförmigen Bereich mit einem ersten Radius R1 ausgebildet. Der bogenförmige Bereich geht noch innerhalb des ersten Teilabschnitts 31 in einen zylindrischen Bereich über. Am Innendurchmesser D2 geht der Innendurchmesser D2, ausgehend von der Gleitfläche 3a im ersten Teilabschnitt 31 ebenfalls unmittelbar in einen bogenförmigen Bereich mit einem zweiten Radius R2 über.

Am Übergang zwischen der Gleitfläche 3a und dem Außendurchmesser D1 und dem Innendurchmesser D2 sind wieder kleine Fasen 34a, 34b gebildet.

Der zweite Teilabschnitt 32 ist im zweiten Ausführungsbeispiel mit einem konstanten Außendurchmesser D1 und einem konstanten Innendurchmesser D2 ausgebildet, sodass dieser ringzylindrisch über seine gesamte Länge in Axialrichtung A ausgebildet ist. Der dritte Teilabschnitt 33 ist ähnlich wie im ersten Ausführungsbeispiel wieder mit einer sich verkleinernden Querschnittsfläche ausgebildet, wobei sich hier der Außendurchmesser D1 in gleichem Umfang reduziert wie sich der Innendurchmesser D2 vergrößert.

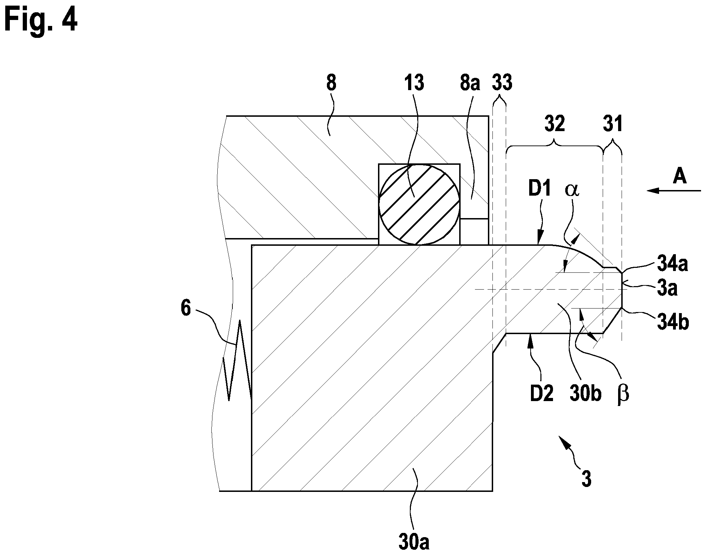

Figur 4 zeigt eine Gleitringdichtungsanordnung gemäß einem dritten Ausführungsbeispiel, wobei wiederum gleiche bzw. funktional gleiche Teile wie in den ersten Ausführungsbeispielen bezeichnet sind.

Beim dritten Ausführungsbeispiel ist wiederum der Verschleißbereich 30b unterschiedlich zu den vorhergehenden Ausführungsbeispielen ausgebildet.

Wie aus Figur 4 ersichtlich ist, ist der erste Teilabschnitt 31 wie im ersten Ausführungsbeispiel mit unterschiedlichen Geometrien am Außendurchmesser D1 und am Innendurchmesser D2 und unterschiedlichen Winkeln α und β vorgesehen. Am zweiten Teilabschnitt 32 ist am Außendurchmesser ein bogenförmiger Verlauf entsprechend einem Parabelast gebildet. Am Innendurchmesser D2 ist am zweiten Teilabschnitt 32 der Innendurchmesser D2 konstant ausgebildet. Der Außendurchmesser D1 geht vom zweiten Teilabschnitt 32 in den dritten Teilabschnitt 33 in einen zylindrischen Bereich über. Der Innendurchmesser D2 wird im dritten Teilabschnitt 33 in Axialrichtung A linear verkleinert, sodass sich im Betrieb, wenn der Verschleißbereich 30b bis zum dritten Teilabschnitt 33 verschlissen ist, sich die Gleitfläche 3a des rotierenden Gleitrings 3 kontinuierlich vergrößert, wodurch eine erhöhte Leckage am Dichtspalt 5 auftritt. Dies ist dann das Sicherheitsanzeichen, dass ein Austausch oder eine Wartung der Gleitringdichtung vorgenommen werden soll, um ein Anlaufen des stationären Gleitrings 4 am Flansch 8a zu vermeiden.

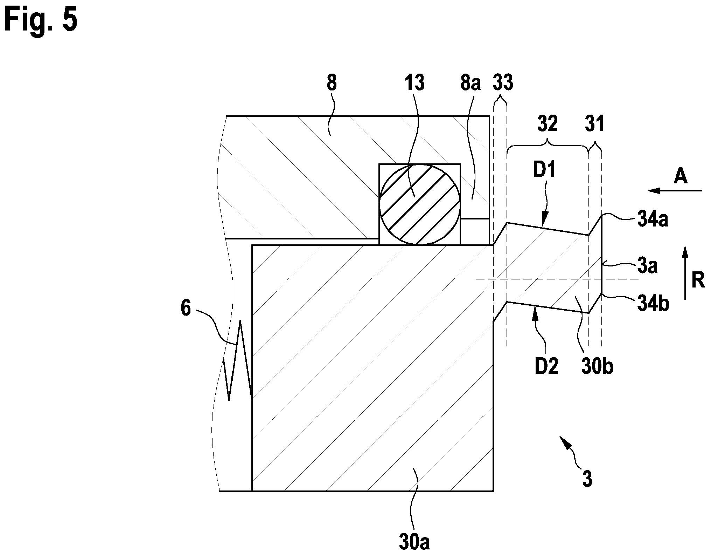

Figur 5 zeigt eine Gleitringdichtungsanordnung mit einem rotierenden Gleitring 3 gemäß einem vierten Ausführungsbeispiel der Erfindung. Gleiche bzw. funktional gleiche Teile sind wiederum mit den gleichen Bezugszeichen bezeichnet. Der rotierende Gleitring 3 mit dem Verschleißbereich 30b des vierten Ausführungsbeispiels weist dabei im Unterschied zu den vorhergehenden Ausführungsbeispielen jeweils einen konstanten Abstand zwischen dem Außendurchmesser D1 und dem Innendurchmesser D2 auf. Dies wird dadurch erreicht, dass die drei Teilabschnitte 31, 32, 33 jeweils für sich betrachtet als Parallelogramme vorgesehen sind, deren in Radialrichtung R der Gleitringdichtung gerichteten Seiten jeweils gleich lang sind. Auch dadurch kann eine individuelle Anpassung eines Verschleißverhaltens der Gleitringdichtung 2 und eine Modellierung der am Dichtspalt zwischen den Gleitflächen auftretenden Belastungen erreicht werden.

Beim vierten Ausführungsbeispiel ändert sich auch sowohl der Außendurchmesser D1 als auch der Innendurchmesser D2 in Axialrichtung A ausgehend von der Gleitfläche 3a kontinuierlich.

### Bezugszeichenliste

- 1: Gleitringdichtungsanordnung
- 2: Gleitringdichtung
- 3: rotierender Gleitring
- 3a: Gleitfläche des rotierenden Gleitrings
- 4: stationärer Gleitring
- 4a: Gleitfläche des stationären Gleitrings
- 5: Dichtspalt
- 6: Vorspanneinrichtung
- 7: Welle
- 8: Gleitringträger
- 8a: Flansch des Gleitringträgers
- 9: Gehäuse
- 10: Schraube
- 11: Produktbereich
- 12: Atmosphärenbereich
- 13: Nebendichtung
- 30a: Basisbereich des rotierenden Gleitrings
- 30b: Verschleißbereich des rotierenden Gleitrings
- 31: erster Teilabschnitt
- 32: zweiter Teilabschnitt
- 33: dritter Teilabschnitt
- 34a: erste Fase
- 34b: zweite Fase
- A: Axialrichtung
- D1: Außendurchmesser
- D2: Innendurchmesser
- R: Radialrichtung
- R1: erster Radius
- R2: zweiter Radius
- X-X: Mittelachse der Gleitringdichtungsanordnung
- α: erster Winkel
- β: zweiter Winkel
- γ: dritter Winkel

## Patentansprüche

1. Gleitringdichtungsanordnung, umfassend:
- eine Gleitringdichtung (2) mit einem rotierenden Gleitring (3) mit einer Gleitfläche (3a) und einem stationären Gleitring (4) mit einer Gleitfläche (4a), welche zwischen sich einen Dichtspalt (5) definieren,
- wobei einer der Gleitringe als Verschleißgleitring ausgelegt ist und eine geringere Härte aufweist als der andere der Gleitringe, so dass die Gleitringdichtung (2) eine Hart-Weich-Paarung aufweist,
- wobei der Verschleißgleitring einen Basisbereich (30a) und einen Verschleißbereich (30b) aufweist,
- wobei der Verschleißbereich (30b) in Axialrichtung (A) der Gleitringdichtungsanordnung einen zumindest teilweise unzylindrischen Bereich aufweist,
- **dadurch gekennzeichnet, dass** der Verschleißbereich (30b) einen ersten Teilabschnitt (31) aufweist, welcher sich an eine Gleitfläche (3a) des Verschleißgleitrings anschließt und eine sich in Axialrichtung (A) verändernde, ringförmige Querschnittsfläche aufweist,
- wobei der Verschleißbereich (30b) einen zweiten Teilabschnitt (32) aufweist, welcher sich in Axialrichtung unmittelbar an den ersten Teilabschnitt (31) anschließt und welcher eine sich in Axialrichtung (A) verändernde, ringförmige Querschnittsfläche aufweist, oder welcher eine sich in Axialrichtung (A) konstante Querschnittsfläche aufweist,
- wobei der unzylindrische Bereich des Verschleißbereichs (30b) in Axialrichtung (A) der Gleitringdichtungsanordnung eine sich verändernde, ringförmige Querschnittsfläche aufweist, derart, dass sich zumindest ein Außendurchmesser (D1) des Verschleißbereichs und ein Innendurchmesser (D2) des Verschleißbereichs in Axialrichtung (A) ändert, und
- wobei der erste Teilabschnitt (31) eine sich ausgehend von der Gleitfläche (3a) in Axialrichtung (A) erweiternde Querschnittsfläche aufweist.

2. Gleitringdichtungsanordnung nach Anspruch 1, wobei der Verschleißbereich einen teilzylindrischen Bereich aufweist oder wobei sich der Außendurchmesser (D1) und/oder der Innendurchmesser (D2) des Verschleißbereichs (30b) in Axialrichtung (A) kontinuierlich ändern.

3. Gleitringdichtungsanordnung nach einem der vorhergehenden Ansprüche, wobei der Verschleißbereich (30b) ferner einen dritten Teilabschnitt (33) aufweist, welcher sich in Axialrichtung (A) unmittelbar an den zweiten Teilabschnitt (32) anschließt und welcher eine sich in Axialrichtung (A) verändernde, ringförmige Querschnittsfläche aufweist.

4. Gleitringdichtungsanordnung nach einem der vorhergehenden Ansprüche, wobei sich wenigstens einer der Teilabschnitte (31) am Außendurchmesser (D1) in Axialrichtung (A) geradlinig vergrößert und/oder wobei sich wenigstens einer der Teilbabschnitte (31) am Innendurchmesser (D2) in Axialrichtung geradlinig verkleinert.

5. Gleitringdichtungsanordnung nach Anspruch 4, wobei sich der Außendurchmesser (D1) des ersten Teilabschnitts (31) in einem ersten Winkel α vergrößert und sich der Innendurchmesser (D2) des ersten Teilabschnitts (31) in Axialrichtung in einem zweiten Winkel β verkleinert, welcher unterschiedlich zum ersten Winkel α ist.

6. Gleitringdichtungsanordnung nach einem der Ansprüche 3 bis 5, wobei sich die Querschnittsfläche des dritten Teilbereichs (33) in Axialrichtung (A) verringert.

7. Gleitringdichtungsanordnung nach einem der vorhergehenden Ansprüche, wobei sich der Außendurchmesser (D1) an wenigstens einem Teilabschnitt (31, 32, 33) in Axialrichtung (A) geradlinig verändert oder wobei sich der Außendurchmesser (D1) in wenigstens einem Teilabschnitt (31, 32, 33) in Axialrichtung (A) bogenförmig verändert und/oder
wobei sich der Innendurchmesser (D2) an wenigstens einem Teilabschnitt (31, 32, 33) in Axialrichtung (A) geradlinig verändert oder wobei sich der Innendurchmesser (D2) in wenigstens einem Teilabschnitt (31, 32, 33) in Axialrichtung (A) bogenförmig verändert.

8. Gleitringdichtungsanordnung nach einem der vorhergehenden Ansprüche, wobei am Übergang zwischen der Gleitfläche (3a) des rotierenden Gleitrings (3) und dem Verschleißbereich (30b) am Außendurchmesser (D1) eine erste Fase (34a) ausgebildet ist und am Innendurchmesser (D2) eine zweite Fase (34b) ausgebildet ist.

9. Gleitringdichtungsanordnung nach einem der vorhergehenden Ansprüche, wobei der Verschleißgleitring aus einem Graphit und/oder Kohlenstoff umfassenden Material hergestellt ist.

10. Gleitringdichtungsanordnung nach einem der vorhergehenden Ansprüche, wobei der Verschleißbereich (30b) wenigstens einen Teilabschnitt (31, 32, 33) aufweist, dessen Querschnittsfläche in Axialrichtung (A) konstant bleibt.

## Claims

1. A mechanical seal assembly comprising:
- a mechanical seal (2) comprising a rotating slide ring (3) having a sliding surface (3a) and a stationary slide ring (4) having a sliding surface (4a) defining a sealing gap (5) therebetween
- wherein one of the slide rings is designed as a wearing slide ring having a hardness lower than the other one of the slide rings, so that the mechanical seal (2) comprises a hard-soft pairing,
- said wearing slide ring comprising a base area (30a) and a wear area (30b),
- wherein the wear area (30b) at least partially has an non-cylindrical area in the axial direction (A) of the mechanical seal assembly,
- **characterized in that** the wear area (30b) has a first section (31) which adjoins a sliding surface (3a) of the wearing slide ring and has an annular cross-sectional area which changes in the axial direction (A),
- wherein the wear area (30b) has a second section (32) which directly adjoins the first section (31) in the axial direction and which has an annular cross-sectional area changing in the axial direction (A), or which has a constant cross-sectional area in the axial direction (A),
- wherein the non-cylindrical portion of the wear area (30b) has a varying annular cross-sectional area in the axial direction (A) of the mechanical seal assembly such that at least one of an outer diameter (D1) of the wear area and an inner diameter (D2) of the wear area varies in the axial direction (A), and
- wherein the first section (31) has a cross-sectional area which widens in the axial direction (A) starting from the sliding surface (3a).

2. The mechanical seal assembly according to claim 1, wherein the wear area has a partially cylindrical area or wherein the outer diameter (D1) and/or the inner diameter (D2) of the wear area (30b) continuously change in the axial direction (A).

3. The mechanical seal assembly according to one of the preceding claims, wherein the wear area (30b) further comprises a third section (33) which directly adjoins the second section (32) in axial direction (A) and which has an annular cross-sectional area varying in axial direction (A).

4. The mechanical seal assembly according to one of the preceding claims, wherein at least one of the sections (31) linearly increases in the axial direction (A) at the outer diameter (D1) and/or wherein at least one of the sections (31) linearly decreases in the axial direction at the inner diameter (D2).

5. The mechanical seal assembly according to claim 4, wherein the outer diameter (D1) of the first section (31) increases at a first angle α and the inner diameter (D2) of the first section (31) decreases in axial direction at a second angle β, which is different from the first angle α.

6. The mechanical seal assembly according to one of the claims 3 to 5, wherein the cross-sectional area of the third section (33) decreases in the axial direction (A).

7. The mechanical seal assembly according to one of the preceding claims, wherein the outer diameter (D1), in at least one section (31, 32, 33), linearly changes in the axial direction (A) or wherein the outer diameter (D1), in at least one section (31, 32, 33), arcuately changes in the axial direction (A) and/or
wherein the inner diameter (D2), in at least one section (31, 32, 33), linearly changes in the axial direction (A) or wherein the inner diameter (D2), in at least one section (31, 32, 33), arcuately changes in the axial direction (A).

8. The mechanical seal assembly according to one of the preceding claims, wherein a first chamfer (34a) is formed at the transition between the sliding surface (3a) of the rotating slide ring (3) and the wear area (30b) on the outer diameter (D1) and a second chamfer (34b) is formed on the inner diameter (D2).

9. The mechanical seal assembly according to one of the preceding claims, wherein the wearing slide ring is made of a material comprising graphite and/or carbon.

10. The mechanical seal assembly according to one of the preceding claims, wherein the wear area (30b) comprises at least one section (31, 32, 33) the cross-sectional area of which remains constant in the axial direction (A).

## Revendications

1. Ensemble joint mécanique, comprenant :
- un joint mécanique (2) avec une bague collectrice rotative (3) ayant une surface de glissement (3a) et une bague collectrice fixe (4) ayant une seconde surface de glissement (4a), qui définissent un espace d'étanchéité (5) entre elles,
- dans lequel l'une des bagues collectrices est conçue comme une bague collectrice d'usure et présente une dureté inférieure à celle de l'autre des bagues collectrices, de sorte que le joint mécanique (2) présente un appariement dur-souple,
- dans lequel la bague collectrice d'usure présente une zone de base (30a) et une zone d'usure (30b),
- dans lequel la zone d'usure (30b) présente une zone au moins partiellement non cylindrique dans la direction axiale (A) de l'ensemble joint mécanique,
- **caractérisé en ce que** la zone d'usure (30b) présente une première section partielle (31) qui se raccorde à une surface de glissement (3a) de la bague collectrice d'usure et présente une surface de section transversale annulaire changeant dans la direction axiale (A),
- dans lequel la zone d'usure (30b) présente une deuxième section partielle (32) qui se raccorde directement à la première section partielle (31) dans la direction axiale et qui présente une surface de section transversale annulaire changeant dans la direction axiale (A), ou qui présente une surface de section transversale constante dans la direction axiale (A),
- dans lequel la zone non cylindrique de la zone d'usure (30b) dans la direction axiale (A) de l'ensemble joint mécanique présente une surface de section transversale annulaire changeante, de sorte qu'au moins un diamètre extérieur (D1) de la zone d'usure et un diamètre intérieur (D2) de la zone d'usure changent dans la direction axiale (A), et
- dans lequel la première section partielle (31) présente une surface de section transversale s'élargissant dans la direction axiale (A) à partir de la surface de glissement (3a).

2. Ensemble joint mécanique selon la revendication 1, dans lequel la zone d'usure présente une zone partiellement cylindrique ou dans lequel le diamètre extérieur (D1) et/ou le diamètre intérieur (D2) de la zone d'usure (30b) changent continuellement dans la direction axiale (A).

3. Ensemble joint mécanique selon l'une quelconque des revendications précédentes, dans lequel la zone d'usure (30b) présente en outre une troisième section partielle (33) qui se raccorde directement à la deuxième section partielle (32) dans la direction axiale (A) et qui présente une surface de section transversale annulaire changeant dans la direction axiale (A).

4. Ensemble joint mécanique selon l'une quelconque des revendications précédentes, dans lequel au moins l'une des sections partielles (31) sur le diamètre extérieur (D1) augmente de manière rectiligne dans la direction axiale (A) et/ou dans lequel au moins l'une des sections partielles (31) sur le diamètre intérieur (D2) diminue de manière rectiligne dans la direction axiale.

5. Ensemble joint mécanique selon la revendication 4, dans lequel le diamètre extérieur (D1) de la première section partielle (31) augmente selon un premier angle α et le diamètre intérieur (D2) de la première section partielle (31) diminue dans la direction axiale selon un second angle β qui est différent du premier angle α.

6. Ensemble joint mécanique selon l'une quelconque des revendications 3 à 5, dans lequel la surface de section transversale de la troisième zone partielle (33) diminue dans la direction axiale (A).

7. Ensemble joint mécanique selon l'une quelconque des revendications précédentes, dans lequel le diamètre extérieur (D1) change de manière rectiligne sur au moins une section partielle (31, 32, 33) dans la direction axiale (A) ou dans lequel le diamètre extérieur (D1) change de manière arquée dans au moins une section partielle (31, 32, 33) dans la direction axiale (A) et/ou
dans lequel le diamètre intérieur (D2) change de manière rectiligne sur au moins une section partielle (31, 32, 33) dans la direction axiale (A) ou dans lequel le diamètre intérieur (D2) change de manière arquée dans au moins une section partielle (31, 32, 33) dans la direction axiale (A).

8. Ensemble joint mécanique selon l'une quelconque des revendications précédentes, dans lequel un premier chanfrein (34a) est réalisé sur le diamètre extérieur (D1) et un second chanfrein (34b) est réalisé sur le diamètre intérieur (D2) au niveau de la transition entre la surface de glissement (3a) de la bague collectrice rotative (3) et la zone d'usure (30b).

9. Ensemble joint mécanique selon l'une quelconque des revendications précédentes, dans lequel la bague d'usure mécanique est fabriquée dans un matériau comprenant du graphite et/ou du carbone.

10. Ensemble joint mécanique selon l'une quelconque des revendications précédentes, dans lequel la zone d'usure (30b) présente au moins une section partielle (31, 32, 33) dont la surface de section transversale reste constante dans la direction axiale (A).
